(19)

Europäisches
Patentamt
European
Patent Office
Office européen
des brevets

(11)  **EP 1 944 586 A1**

(12)  **EUROPEAN PATENT APPLICATION**

(43) Date of publication:
**16.07.2008  Bulletin 2008/29**

(51) Int Cl.:
*G01F 9/00* (2006.01)  *F02D 41/00* (2006.01)

(21) Application number: **07000417.1**

(22) Date of filing: **10.01.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(71) Applicant: **GM Global Technology Operations, Inc.
Detroit, MI 48265-3000 (US)**

(72) Inventor: **Edgren, Claes
461 54 Trollhättan (SE)**

(74) Representative: **Daniel, Ulrich W.P.
Adam Opel GmbH
Patent- und Markenrecht/ A0-02
65423 Rüsselsheim (DE)**

(54)  **Method for displaying the fuel consumption of a motor vehicle**

(57)  Method for displaying the fuel consumption of a motor vehicle which is able to use at least two different kinds of fuels. To inform a driver about the true energy consumption of his vehicle the total fuel consumption of a mixture of fuels is adjusted to a fuel consumption of a reference fuel.

**EP 1 944 586 A1**

**Description**

The invention relates to a method for displaying the fuel consumption of a motor vehicle, which is able to use at least two different kinds of fuels.

As it is well known motor vehicles use for powering there motor liquid fuels as petrol or diesel. To display the remaining amount of fuel in a tank of the motor vehicle there is used a fuel gauge in the dashboard. Furthermore modern motor vehicles are equipped with a car computer and an electronic motor control device.

The average fuel consumption is one of the most common functions in the car computer. It is used by the customers to monitor their cars fuel efficiency as well as to indicate differences in fuel consumption related to their own driving behaviour in MPG or liter/100 Km. E.g. 11 1/100 Km is normal for a petrol car in city traffic, 7 1/100 km is normal for smooth highway driving and 15 1/100 km is what can be expected when hauling a caravan. Drivers of diesel vehicles have another set of normal consumption levels, based on the more fuel-efficient diesel technology.

To reduce the pollution of the environment more and more mixtures of normal petrol and ethanol are used, whereby the denotation, for example E85, shows the volume percentage of ethanol in the fuel. That means that fuel E85 consists of 85% ethanol and 15% regular petrol. Ethanol also has the advantage that it can be produced from regrowing resources. On the other hand it has the disadvantage, that the consumption of ethanol is higher than the consumption of regular petrol since the energy content of ethanol is lower than that of petrol.

A car with an E85 engine can run on either petrol, E85 fuel or an arbitrary mix of the fuels. But as the E85 has less energy per litre than petrol, the fuel consumption increases accordingly. The advantage of E85 vehicles is that the customer can choose to fill E85 or petrol, based on fuel availability. This means that the tank content mix between petrol an E85 will change every time the vehicle is refuelled. The consequence to the average fuel consumption calculation in such cars is that the displayed average value may be based on different and constantly changing mix of E85 and petrol. Thereby, the displayed value is more or less useless to the driver, as he no longer can judge what is normal fuel consumption: 131/100km on highway may look good at first glance, but is much more than expected if the tank content mix was 90% petrol and 10% E85.

The DE 102 17 664 A1 discloses a device and a method for the consumption control of a motor vehicle. Whereas the motor of this vehicle may receive its fuel from two different tanks which are filled with two different fuels. A mixture of fuels in one tank is not disclosed.

The JP 03056827 A discloses a fuel display system which can take into account that there is some ethanol or another alcohol in the fuel. But this correction factor has to be added by a user of the motor vehicle.

It is the goal of the invention to disclose a method for displaying the fuel consumption as mentioned, according to which a true value of consumption can be displayed without the possibility that a user could submit a false value.

According to the invention this object is reached in that the total fuel consumption of a mixture of fuels is adjusted to a fuel consumption of a reference fuel.

With this method it is not displayed any more the total or absolute fuel consumption of the mixed fuel in the tank which would be normally higher when ethanol is in the tank, as if there was only pure petrol in the tank. For example when a car drives with the same speed on a highway with the tank filled with E85 the total consumption would be about 13 1/100 km. If the car is refuelled with petrol, giving a mixture of 50/50 of ethanol and petrol in the tank the absolute consumption would be reduced to 11 1/100 km. When the car than is refuelled again with E85 giving a mixture of 75% ethanol and 25% petrol in the tank the absolute consumption would be, same speed at all times, 12 1/100 Km. Therefore a driver does not know exactly if the change in the total consumption comes from a change in the mixture of fuel or from different ways to drive, e.g. from more and faster accelerations.

By displaying the total fuel consumption to a reference fuel the driver is now informed about the theoretical consumption of this reference fuel, which should be normally petrol. So he can compare the consumption of the mixture of fuels to the consumption of for example regular petrol or E85. Also as reference fuel could be chosen another mixture, for example E90 or E75. According to this he knows if a higher or lower consumption of the calculated reference fuel, that means a lower or higher consumption of energy, comes from a change in his way to drive.

The conversion is preferably done by using the formula:

$$FC_{petrol} = FC_{actual} \ / (M_{E100} \ast K_{E100} + (1-M_{E100})) \qquad (1)$$

where

FC$_{petrol}$ is the momentary fuel consumption based on the reference fuel petrol
FC$_{actual}$ is the actual momentary fuel consumption as measured by the car
M$_{E100}$ is the percentage of ethanol (E100) in the tank

$K_{E100}$ is the factor in fuel consumption between ethanol (E100) fuel and petrol (approximately 1.5)

In case the preferred reference fuel is E85, then the fuel consumption value can be recalculated using the formula

$$FC_{E85} = FC_{petrol} * K_{E85} \tag{2}$$

where

FC$_{petrol}$ is the momentary fuel consumption based on the reference fuel petrol calculated in formula (1)
FC$_{E85}$ is the momentary fuel consumption based on the reference fuel E85
$K_{E85}$ is the factor in fuel consumption between E85 fuel and petrol (approximately 1.35)

The mixture of for example petrol and ethanol is analyzed automatically by the engine management system. This information is also used for setting up optimal engine control parameters, but since the information is also available on a vehicle data bus the car computer can just read it and use it. Especially a driver has not to insert any values.
The benefit of the invention lies in the fact that the actual energy consumption is displayed and the driver can see that the car fuel consumption is normal regardless of the content or the mixture of the tank, while in the traditional display, the driver does not know if the difference in value is related to different driving style or the difference in fuel mix in the tank.
It mimics the behavior of a single fuel car and the customer can use the function as he is used to from previous cars, monitoring fuel efficiency and see how usage and driving behavior affects fuel consumption.
Preferably the reference fuel is petrol since most of the car drivers up to now are used to the fact that petrol is the only fuel of their car. Therefore they can compare easily the displayed fuel or energy consumption of their vehicle with mixed fuels with the fuel or energy consumption of a car driven only with petrol. In the same way a consumption of petrol with ethanol, especially E85, can be used as reference fuel.
The resulting momentary fuel consumption values (FC$_{E85}$ and FC$_{petrol}$) can be displayed to the driver as they are. As it is already known the consumption of fuel can be displayed, for example on an screen of a car computer, as well as the average fuel consumption during the trip.
Also it is possible, that a driver can switch between the displaying of the reference value of the fuel consumption and an absolute fuel consumption, which should be regularly a bit higher than the pure petrol consumption. Also both types of fuel consumption maybe displayed together.
Furthermore an average fuel consumption as well as a momentary fuel consumption can be displayed. For this can be executed an average calculation of the momentary consumption over the time. In the same way a remaining trip distance, based on the momentary fuel consumption, can be displayed.
Also it is possible, that the fuel gauge in the dashboard receives a signal from the car computer which relates to the consumption of the reference fuel. That means that the fuel gauge does not display the true tank content of the vehicle, which would be a mixture of fuels, but the virtual remaining amount of the reference fuel, calculated from the absolute fuel consumption. The fuel gauge also can be adjusted to enter the part of the scale showing "low fuel" which is often a red area on the scale based on the travel range on the current fuel mix, and not as is done today, based on the fuel tank content in litres. It is clear, that the fuel gauge enters this area when the remaining travel range is only very short, for example 50 or 100km. In this case the warning tell-tale for low fuel can light up based on the same conditions.

**Claims**

1. Method for displaying the fuel consumption of a motor vehicle which is able to use at least two different kinds of fuels, **characterised in that**, the total fuel consumption of a mixture of fuels is adjusted to a fuel consumption of a reference fuel.

2. Method according to claim 1, **characterised in that**, as the reference fuel is used petrol or a mixture of petrol with ethanol, especially E85.

3. Method according to claim 1 or 2, **characterised in that**, the reference value and/or an absolute value of the fuel consumption can be displayed.

4. Method according to one of the claims 1 to 3, **characterised in that**, an average fuel consumption is displayed.

**5.** Method according to one of the claims 1 to 4, **characterised in that**, an average fuel consumption as well as a momentary fuel consumption can be displayed.

**6.** Method according to one of the claims 1 to 5, **characterised in that**, a fuel gauge enters a part of a scale showing "low fuel" based on a travel range on the current fuel mix.

**European Patent Office**

**EUROPEAN SEARCH REPORT**

Application Number

EP 07 00 0417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 03 285119 A (MAZDA MOTOR) 16 December 1991 (1991-12-16) * abstract; figures 1-4 * | 1-6 | INV. G01F9/00 F02D41/00 |
| Y | MATSUMOTO S ET AL: "Technology Assessment of Alternative Fuels by CO2 Fixation Use in Passenger Cars" ENERGY CONVERSION AND MANAGEMENT, ELSEVIER SCIENCE PUBLISHERS, OXFORD, GB, vol. 38, no. 1001, 1997, pages S455-S460, XP004061639 ISSN: 0196-8904 * page 456, paragraph 2 * | 1-6 | |
| A | US 5 668 310 A (PARKMAN MICHAEL K [US] ET AL) 16 September 1997 (1997-09-16) * column 1, lines 9-22 * * column 3, lines 31-44 * * column 6, lines 15-25 * * column 7, lines 20-65 * * column 8, line 61 - column 9, line 47 * * figures 1-3 * | 1-6 | |
| A | JP 04 191128 A (FUJI HEAVY IND LTD) 9 July 1992 (1992-07-09) * abstract; figures 1-6 * | 1-6 | TECHNICAL FIELDS SEARCHED (IPC) G01F F02D |
| A | EP 1 018 449 A (NISSAN MOTOR [JP]) 12 July 2000 (2000-07-12) * the whole document * | 4 | |

The present search report has been drawn up for all claims

| Place of search | Date of completion of the search | Examiner |
|---|---|---|
| Munich | 15 June 2007 | Roetsch, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 0417

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2007

| Patent document cited in search report | | Publication date | Patent family member(s) | | Publication date |
|---|---|---|---|---|---|
| JP 3285119 | A | 16-12-1991 | NONE | | |
| US 5668310 | A | 16-09-1997 | US | 5505076 A | 09-04-1996 |
| JP 4191128 | A | 09-07-1992 | JP | 2911053 B2 | 23-06-1999 |
| EP 1018449 | A | 12-07-2000 | JP | 2000205925 A | 28-07-2000 |
| | | | US | 6453731 B1 | 24-09-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10217664 A1
- JP 03056827 A